# EUROPÄISCHE PATENTSCHRIFT

(11) **EP 2 858 539 B1**
(45) Veröffentlichungstag und Bekanntmachung des Hinweises auf die Patenterteilung: **20.01.2016**
(21) Anmeldenummer: 13721278.3
(22) Anmeldetag: 12.04.2013
(51) Int. Cl.: A47J 31/42, A47J 42/38

(54) **KAFFEEMASCHINE**
COFFEE MACHINE
CAFETIÈRE

(30) Priorität: 12.06.2012 DE 202012102131 U
(43) Veröffentlichungstag der Anmeldung: 15.04.2015
(73) Patentinhaber: Eugster/Frismag AG, 8580 Amriswil (CH)
(72) Erfinder: EICHER, Heinz, CH-8645 Jona (CH); SIDOR, Marek, CH-8713 Uerikon (CH)
(74) Vertreter: Wagner, Kilian
(86) Internationale Anmeldenummer: PCT/EP2013/057721
(87) Internationale Veröffentlichungsnummer: WO 2013/185945

(56) Entgegenhaltungen:
- DE-A1-102006 032 710

## Beschreibung

Die Erfindung betrifft eine Kaffeemaschine mit Mahlwerk, also einen sogenannten Kaffeevollautomaten, gemäß dem Oberbegriff des Anspruchs 1.

Bekannt sind Kaffeemaschinen mit einem Mahlwerk, bei welchem ein rotierbar angeordneter Kegel relativ zu einem drehfest angeordneten Mahlring von einem horizontal liegenden Elektromotor angetrieben wird. Bei einer derartigen Konfiguration findet der Austrag des gemahlenen Pulvers tangential bzw. seitlich statt. Dies bedingt eine aufwändige Pulverführung hin zum Mahlwerk, wodurch es zu Pulverablagerungen und Verstopfungen der Pulverführung kommen kann. Darüber hinaus kommt es aufgrund des langes Transportes zu einer statischen Aufladung des Mahlwerks, die wiederum zu Anhaftungen führt, was nachteilig in Bezug auf die Kaffeequalität ist, da bei jeder Mahlung bevorzugt frisch gemahlenes Pulver ohne Rückstände der vorhergehenden, gegebenenfalls länger zurückliegenden Mahlung in der Brühkammer extrahiert werden soll.

Weiter sind Kaffeemaschinen bekannt, bei denen nicht der Mahlkegel sondern ein koaxial dazu angeordneter Mahlring mittels eines Elektromotors rotierbar ist, wobei der Mahlring von einem vertikal angeordneten Motor angetrieben ist, dessen Motorwelle dann parallel zur Drehachse des Mahlrings verläuft. Nachteilig an einer derartigen Konfiguration sind der große Platzbedarf in vertikaler Richtung und die daraus resultierenden eingeschränkten Platzierungsvarianten der Motor-Mahlwerkskombination innerhalb von Kaffeemaschinengehäusen.

Die DE 44 18 139 C1 zeigt eine Kaffeemühle zur Verwendung in Kaffeemaschinen, wobei die Kaffeemühle mit einem rotierbaren Mahlring, der über ein parallel zur Drehachse verlaufende Antriebswelle rotierbar ist.

Die DE 10 2006 032 710 A1 zeigt eine Kaffeemühle, bei der ebenfalls nicht der Mahlring sondern der Mahlkegel rotierend angetrieben ist, wobei die Antriebswelle zum Rotieren des Kegels senkrecht zur Drehachse verläuft. Der Antriebsmotor befindet sich unterhalb mit deutlichem Abstand zu der Kombination aus Mahlring und Mahlkegel.

Die US 7,273,005 B2 beschreibt eine Kaffeemühle ohne radial innerhalb eines Mahlrings angeordneten Mahlkegel. Die Kaffeebohnen werden hier in einem Bereich axial zwischen zwei Mahlscheiben gemahlen.

Bei einer aus der US 2010/0170971 A1 bekannten Kaffeemühle verläuft eine Motorwelle eines Antriebsmotors parallel zur Drehachse des Mahlwerks.

Aus der US 5,542,342 ist eine Kaffeemaschine mit Mahlwerk unbekannten Aufbaus bekannt, wobei das Mahlwerk von einer Antriebswelle angetrieben wird, die wahrscheinlich senkrecht zur Rotationsachse verläuft. Die Kaffeebohnen werden außermittig zugeführt, d.h. eine Drehachse des Mahlwerks durchsetzt nicht einen Kaffeebohnenauslass. Die Kaffeemaschine weist keine Brüheinrichtung mit einer zwischen einer Befüllposition und einer Brühposition verstellbaren Brühkammer aus.

Aus der WO 2010/125438 A2 ist eine Verteileinrichtung zum Verteilen von Kaffeemehlströmen bekannt.

Die WO 2012/001592 A1 beschreibt eine Brüheinheit mit einer zwischen einer Befüllposition und einer Brühposition verstellbaren Brühkammer. Der Brüheinheit ist eine Kaffeemühle zugeordnet.

Ausgehend von dem vorgenannten Stand der Technik liegt der Erfindung die Aufgabe zugrunde eine Kaffeemaschine, insbesondere einen sogenannten Kaffeevollautomaten anzugeben, bei dem der Weg des frisch gemahlenen Kaffeepulvers vom Austritt der Kaffeemühle bis in die Brühkammer hinein möglichst kurz ist, wobei gleichzeitig ein kompakter und flexibler Aufbau der Kaffeemaschine ermöglicht werden soll - insbesondere soll eine platzsparende und variable Anordnung der Kombination aus Kaffeemühle und Elektromotor gewährleistet sein.

Diese Aufgabe wird mit einer Kaffeemaschine mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, bei einer Kaffeemaschine, bei welcher ein außenliegender Mahlring über den Elektromotor relativ zu dem feststehenden Mahlkegel antreibbar ist, die Welle, über die der Mahlring von dem Elektromotor antreibbar ist, senkrecht und radial beabstandet anzuordnen zur gedachten, durch den feststehenden Mahlkegel verlaufenden Drehachse des Mahlrings, um die herum der Mahlring rotierbar ist. Bei der Welle handelt es sich um die Welle des Elektromotors oder eine axial hiermit fluchtende Verlängerung für den Fall eines mehrteiligen Wellenaufbaus. Als weiteres wesentliches Merkmal ist vorgesehen, den Auslass des Mahlwerkes derart anzuordnen, dass dieser sich axial unmittelbar oberhalb der Brühkammer befindet, wenn diese in ihre Befüllposition verschwenkt ist, wobei dann die Drehachse des Mahlrings, sowohl den Mahlwerkauslass als auch die Brühkammer, bevorzugt zentrisch durchsetzt, sodass das mittels der Kaffeemühle durch Mahlen von Kaffeebohnen hergestellte Kaffeepulver schwerkraftbedingt axial aus dem Mahlwerk in die Brühkammer austragbar ist, insbesondere derart, dass das Pulver unmittelbar axial aus dem Mahlwerk in die in der Befüllposition befindliche Brühkammer hineinfallen kann. Durch die Kombination einer senkrecht zur Drehachse des Mahlrings angeordneten Motorwelle mit einem unmittelbar oberhalb der Brühkammer angeordneten Mahlwerkauslass wird eine besonders platzsparende Konfiguration angeboten, bei welcher der Weg des Kaffeepulvers aus dem Mahlwerk in die Brühkammer minimiert wird und gleichzeitig eine variable Möglichkeit zur Positionierung der Anordnung aus Mahlwerk und Elektromotor in Umfangsrichtung bezogen auf eine Hochachse der Brühkammer besteht. Die vorgeschlagene Kaffeemaschine kommt bevorzugt ohne eine seitliche Führung für Kaffeepulver aus, da eine derartige Rutschenkonstruktion nicht benötigt wird, da das Kaffeepulver unmittelbar aus dem Mahlwerk nach unten in die Brühkammer fallen kann, wobei die Umfangswinkelposition der Anordnung aus Mahlwerk und Elektromotor relativ frei wählbar ist, da deren Hocherstreckung parallel zur Drehachse gering ist und somit nicht auf eine Konfiguration der Kaffeemaschine in einem Bereich seitlich der Brühkammer Rücksicht genommen werden muss. Die geringe Höhenerstreckung und die variable Positionierbarkeit der Mahlwerk-Elektromotorkombination minimiert darüber hinaus den Raumbedarf des gesamten "Innenlebens" der Kaffeemaschine, wodurch das Gesamtvolumen des Kaffeemaschinengehäuses im Vergleich zu bekannten Gehäusen deutlich reduzierbar ist. Bevorzugt beträgt die Höhenerstreckung der Kombination aus Mahlwerk und Elektromotor, insbesondere eines später noch zu erläuternden gemeinsamen Gehäuses, maximal ein drittel, weiter bevorzugt maximal ein viertel der maximalen Längserstreckung der Kombination, insbesondere des Gehäuses, senkrecht zur Drehachse.

In Weiterbildung der Erfindung ist mit Vorteil vorgesehen, dass die Kombination aus Mahlwerk und Elektromotor ausschließlich in einem Bereich oberhalb der Befüllposition der Brühkammer angeordnet ist. Mit anderen Worten ist weiterbildungsgemäß vorgesehen, dass radial benachbart zur Brühkammer in der Befüllposition weder das Mahlwerk noch der Elektromotor angeordnet sind. Hierdurch wird ein maximaler Freiheitsgrad im Hinblick auf die Platzierung der Kombination aus Mahlwerk und Elektromotor erreicht.

Im Hinblick auf eine erleichterte Montage und eine weitere Minimierung des Raumbedarfs ist in der Weiterbildung der Erfindung vorgesehen, Mahlwerk und Elektromotor als Baueinheit zusammenzufassen. Zu diesem Zweck ist der Kombination aus Mahlwerk und Elektromotor ein, vorzugsweise als Kunststoff-Spritzgussgehäuse ausgeführtes gemeinsames Gehäuse zugeordnet, welches sowohl den Elektromotor als auch das Mahlwerk umschließt. Das Gehäuse weist bevorzugt einen Wellenaufnahmeabschnitt für einen Wellenabschnitt, insbesondere einen endseitigen Spindelabschnitt der Welle auf sowie einen Dorn zur Anordnung, insbesondere zum Aufstecken, des Mahlkegels, wobei die Längserstreckung des Dorns und die Längserstreckung des Wellenaufnahmeabschnittes des Gehäuses bevorzugt senkrecht zueinander orientiert sind.

Besonders bevorzugt ist eine Ausführungsform des Gehäuses, wenn dieses aus insgesamt zwei, jeweils als Gehäusespritzgussteil ausgebildeten Kunststoffschalen zusammengesetzt ist.

Konstruktiv besonders vorteilhaft im Hinblick auf die Reduzierung der benötigten Bauteile ist es, wenn der Mahlkegel an dem gemeinsamen Gehäuse festgelegt ist, und zwar über eine senkrecht zur Welle bzw. mit der Drehachse des Mahlrings fluchtenden Fixierschraube, die eine, bevorzugt zentrische, Öffnung einer, bevorzugt schneckenartigen, Kaffeebohnenführung durchsetzt. Letztere dient dazu, die in das Mahlwerk mittels des Mahlrings eingezogenen Kaffeebohnen zu führen.

Besonders zweckmäßig ist eine Ausführungsform, bei welcher der Mahlring zur Einstellung des Feinheitsgrades des Mahlgutes axial verstellbar angeordnet ist.

Besonders zweckmäßig ist es hierzu, den bevorzugt drehfest in einer Mahlringaufnahme angeordneten Mahlring über ein Wälzlager relativ zu dem Gehäuse, insbesondere gegenüber einer drehfest in Bezug auf das Gehäuse angeordneten Wälzkörperführung rotierbar anzuordnen, wobei dann der Wälzkörperführung ein, vorzugsweise die Wälzkörperführung umschließender, Verstellring zugeordnet ist, der mit der Wälzkörperführung derart in Eingriff bzw. wirkverbunden ist, dass ein Verdrehen des Verstellrings zu der gewünschten Axialverstellung der Wälzkörperführung mit darin aufgenommenem Mahlring relativ zu dem feststehenden Mahlkegel resultiert. Eine Möglichkeit zur Umwandlung der Verdrehbewegung des Verstellrings in eine Axialverstellbewegung der Wälzkörperführung besteht darin, Verstellring und Wälzkörperführung über eine Innen-Außengewindekombination zusammenwirken zu lassen.

Bevorzugt ist der Verstellring an seinem Außenumfang mit einer Verstellringverzahnung versehen, die manuell betätigbar ist. Zusätzlich oder alternativ kann ein Verstellmotor, beispielsweise über ein Zahnrad oder eine Gewindeschnecke mit der Verstellringverzahnung zusammenwirkend angeordnet sein, um den Mahlgrad automatisch, d.h. elektromotorisch verstellen zu können.

Besonders zweckmäßig ist es zur Minimierung von Vibrationen, wenn sich die Mahlringaufnahme und/oder die Wälzkörperführung über mindestens ein Dämpfungselement an dem gemeinsamen Gehäuse oder einem gehäusefesten Bauteil abstützen/abstützt.

Besonders bevorzugt sind Dämpfungselemente auf voneinander abgewandten Seiten der Wälzkörper, insbesondere Wälzkugeln angeordnet.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1 und 2: zwei Schnittansichten einer Kaffeemühlen/Elektromotorkombination,
- Fig. 3a und 3b: unterschiedliche perspektivische Ansichten der Kombination gemäß Fig. 1 und 2,
- Fig. 4: eine Explosionsdarstellung der Kombination gemäß den Fig. 1 bis 3,
- Fig. 5: eine Relativanordnung der Kombination aus Kaffeemühle und Brüheinheit, und
- Fig. 6: eine Relativanordnung von Kaffeemühle mit Elektromotor relativ zur Brüheinheit gemäß dem Stand der Technik.

In den Figuren sind gleiche Elemente mit den gleichen Bezugszeichen gekennzeichnet.

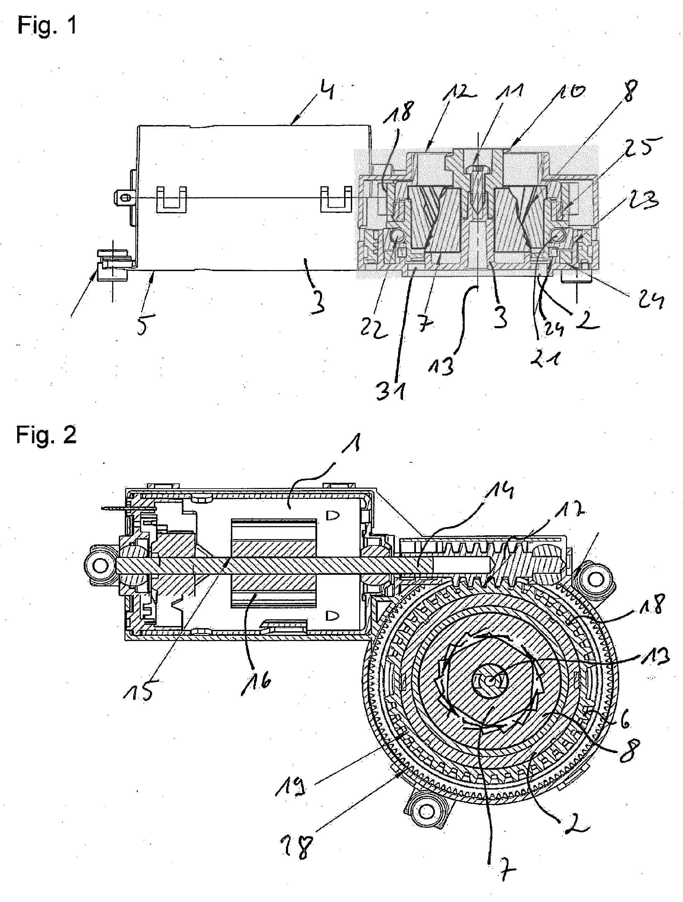

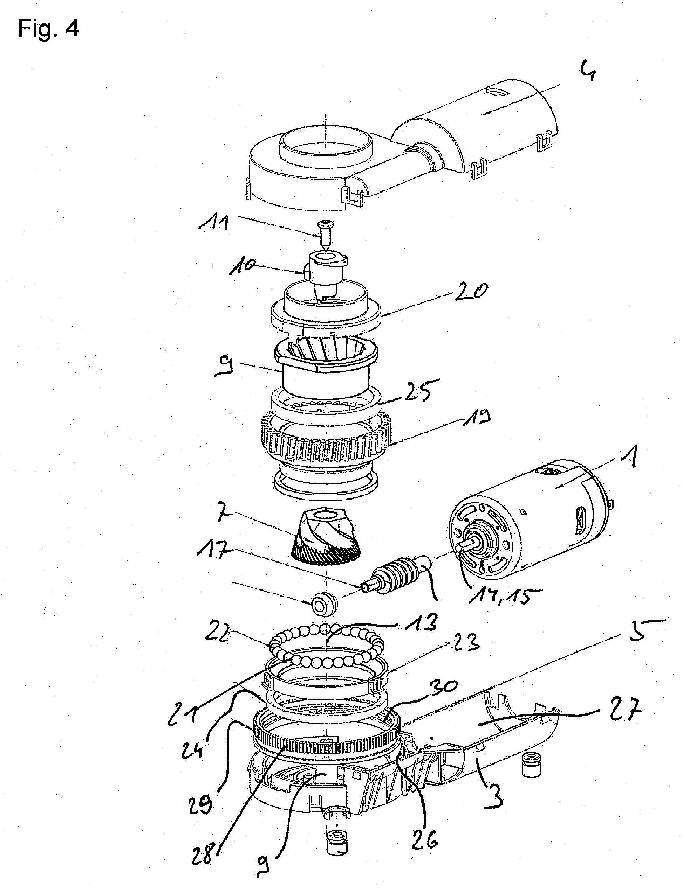

In den Fig. 1 bis 4 ist in unterschiedlichen, teilweise geschnittenen oder als Explosionsdarstellung ausgeführten Abbildungen die Kombination aus einem Elektromotor 1 und einer Kaffeemühle 2 gezeigt. Vorgenannte Kombination weist ein gemeinsames Gehäuse 3 auf, welches von zwei miteinander verrasteten Kunststoff-Spritzgussgehäuseschalen 4, 5 gebildet ist. In dem Gehäuse 3 sind sowohl der Elektromotor 1 als auch die Kaffeemühle 2 aufgenommen. Die Kaffeemühle 2 umfasst ein Mahlwerk 6 mit einem zentrischen, feststehenden Mahlkegel 7 und einem koaxial dazu angeordneten, sich nach oben öffnenden Mahlring 8, welcher mittelbar über dem Elektromotor 1 rotierbar ist. Der Mahlkegel 7 sitzt drehfest auf einem zentrischen Dorn 9 des Gehäuses 3 und ist über eine als Einlaufschnecke ausgebildete Kaffeebohnenführung 10 (Führungsbauteil) und eine Fixierschraube 11 drehfest am Gehäuse fixiert, wobei die Kaffeebohnenführung 10 von der Schraube 11 axial durchsetzt ist und in einen oberen, verjüngten Dornabschnitt eingeschraubt ist, auf welchen die Kaffeebohnenführung 10 aufgesetzt ist.

Wie sich aus Fig. 1 ergibt, sitzt die Kaffeebohnenführung 10 zentrisch in einem in der Draufsicht ringförmigen Mahlwerkeinlass 12, welcher radial außen von einer in die obere Gehäuseschale 4 hineinragenden Mahlringabdeckung begrenzt ist.

Wie sich weiterhin aus den Figuren ergibt, ist die Fixierschraube 11 bzw. ist der Mahlkegel 7 zentrisch durchsetzt von einer gedachten Drehachse 13, um welche der Mahlring 8 um den Mahlkegel 7 verdrehbar ist.

Wie sich aus Fig. 2 ergibt, ist zum Antreiben des Mahlrings 8 eine Welle 14 vorgesehen, die tangential verläuft in Bezug auf den Mahlring und damit senkrecht in Bezug auf die Drehachse 13. Die Welle 14 wird in einem in der Zeichnungsebene linken Bereich von einer Motorwelle 15 gebildet, auf welcher drehfest ein rotierbarer Anker 16 sitzt. Die Welle 14 weist in einem in der Zeichnungsebene rechten Abschnitt einen Schneckenabschnitt 17 auf, der mit einer Abtriebsverzahnung 18 in Eingriff ist. Die Abtriebsverzahnung ist in dem gezeigten Ausführungsbeispiel an einer Mahlringaufnahme 19 vorgesehen, innerhalb welcher der Mahlring 8, der vorzugsweise aus Keramik oder Metall beschaffen ist, drehfest aufgenommen ist.

Die als Kunststoffspritzgussteil ausgebildete Mahlringaufnahme ist über ein in dem gezeigten Ausführungsbeispiel als Kugellager ausgebildetes Wälzlager 21 mit Wälzkörpern 22 verdrehbar gelagert gegenüber einer drehfest im Gehäuse aufgenommenen Wälzkörperführung 23, die in dem gezeigten Ausführungsbeispiel als Kunststoffspritzgussteil ausgeführt ist. Die Wälzkörperführung 23 stützt sich in der Zeichnungsebene unten über ein ringförmiges Dämpfungselement 24 am Gehäuse ab. Das Dämpfungselement 24 ist in dem gezeigten Ausführungsbeispiel als Schaumstoffring ausgeführt. Über ein weiteres Dämpfungselement 25, das ebenfalls als Schaumstoffring ausgebildet ist, stützt sich die Mahlringaufnahme 19 in der Zeichnungsebene oben an der Mahlringabdeckung 20 und radial außen an der Abtriebsverzahnung 18 ab.

Das gemeinsame Gehäuse 3 weist einen Wellenaufnahmeabschnitt 26 auf, in welchem der Schneckenabschnitt 17 der Welle 14 aufnehmbar ist. Der Wellenabschnitt 26 fluchtet mit einem Elektromotorabschnitt 27 zur Aufnahme des Elektromotors 1. Die Drehachse 13 ist abschnittsweise umschlossen vom Dorn 9, so dass die Längserstreckung des Dorns 9 sowie die Längserstreckung des Wellenabschnitts 26 rechtwinklig zueinander sowie mit Radialabstand zueinander verlaufen.

Der Mahlring 9 ist axial relativ zu dem ortsfest angeordneten Mahlkegel verstellbar. Zu diesem Zweck ist ein Verstellring 28 mit einer Verstellringverzahnung 29 vorgesehen, wobei in dem gezeigten Ausführungsbeispiel die Verstellringverzahnung 29 manuell greifbar und verdrehbar ist. An seinem Innenumfang weist der Verstellring 28 ein Innengewinde 30 auf, welches mit einem korrespondierenden Außengewinde der ringförmigen Wälzkörperführung 23 in Eingriff ist, so dass ein Verdrehen des Verstellrings 28 zu einer Auf- oder Abwärtsbewegung der Wälzkörperführung 23 und in der Folge des gesamten Wälzlagers 21, der Mahlringaufnahme 19 und des Mahlrings 9 führt.

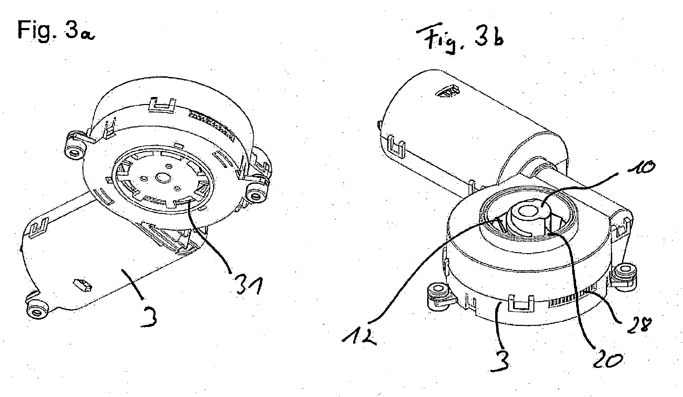

Wie sich aus einer Zusammenschau der Fig. 3a und 1 ergibt, umfasst das Gehäuse 3 einen unteren Mahlwerkauslass 31, der aus mehreren, ringförmig angeordneten Öffnungen besteht, die in einem Bereich unterhalb des Mahlrings 8 angeordnet sind, wobei das gemahlene Kaffeepulver von oben durch den Mahlwerkauslass 31 nach unten fallen kann. Der Mahlwerkauslass 31 ist koaxial zur Drehachse 13 angeordnet. Der Mahlwerkauslass 31 sitzt auf einer von dem Mahlwerkeinlass 12 abgewandten Gehäuseseite.

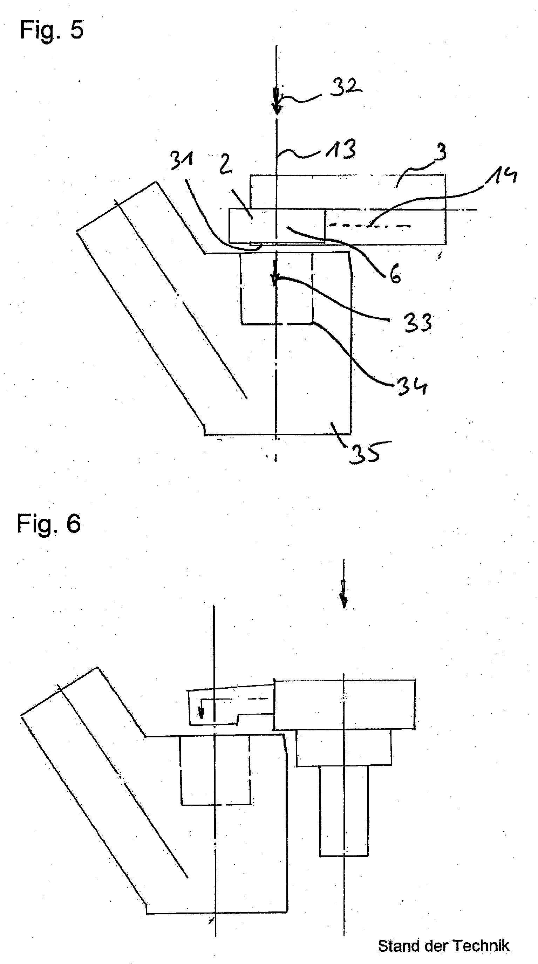

Innerhalb der Kaffeemaschine ist die Kombination aus Elektromotor 1 und Kaffeemühle 2 mit ihrem gemeinsamen Gehäuse 3, bevorzugt wie in Fig. 5 gezeigt, angeordnet, nämlich derart, dass dem Mahlwerkeinlass 12 zugeführte Kaffeebohnen 32 innerhalb des Mahlwerks 6 gemahlen werden können und dann in axialer Richtung aus dem Mahlwerk als Kaffeemehl 33 ausgetragen werden können, und zwar parallel zur Drehachse 13 des Mahlwerks 6, genauer des Mahlrings 8. In Fig. 5 ist die senkrecht zur Drehachse 13 verlaufende Welle 14 des Antriebs für das Mahlwerk 6 angedeutet.

Aus Fig. 5 ergibt sich, dass die Kombination aus Elektromotor 1 und Kaffeemühle 2 vollständig oberhalb einer Brühkammer 34 einer Brüheinrichtung 35 angeordnet ist, wenn sich die Brühkammer 34 in ihrer dargestellten Befüllposition befindet. Die Brühkammer 34 kann in an sich bekannter Weise innerhalb der Brüheinrichtung 35 der Zeichnungsebene nach links in eine Brühposition verschwenkt werden, in welcher sie durch einen Brühkolben verschließbar ist.

Aus der in Fig. 5 gezeigten Konfiguration ergibt sich, dass das Kaffeemehl 33 in der Zeichnungsebene nach unten parallel zur Drehachse 6 aus dem Mahlwerkauslass 31 in die Brühkammer 34 fallen kann. Wie sich aus Fig. 5 weiter ergibt, durchsetzt die Drehachse 13 nicht nur zentrisch das Mahlwerk 6, sondern durchsetzt auch die Brühkammer 34, bevorzugt wie gezeigt zentrisch. Hieraus ergibt sich, dass die Welle 14 auch senkrecht zur Hocherstreckung bzw. Längserstreckung der Brühkammer 34 in ihrer Befüllposition verläuft.

Ein Vergleich mit Fig. 6, der eine Konfiguration gemäß dem Stand der Technik zeigt, offenbart unmittelbar die Vorteilhaftigkeit einer erfindungsgemäßen Ausführungsform, da auf Grund der parallelen Anordnung der Motorwelle zur Brühkammerachse und zur Drehachse des Mahlwerks ein hoher Bauraumbedarf in einem Bereich neben der Brüheinrichtung resultiert, und das Kaffeemehl muss seitlich über Führungen ausgetragen werden hin zur Brühkammer, worauf bei einer erfindungsgemäßen Ausgestaltung verzichtet werden kann.

### Bezugszeichenliste

- 1: Elektromotor
- 2: Kaffeemühle
- 3: Gehäuse
- 4: Gehäuseschale
- 5: Gehäuseschale
- 6: Mahlwerk
- 7: Mahlkegel
- 8: Mahlring
- 9: Dorn
- 10: Kaffeebohnenführung
- 11: Fixierschraube
- 12: Mahlwerkeinlass
- 13: Drehachse
- 14: Welle
- 15: Motorwelle
- 16: Anker
- 17: Schneckenabschnitt
- 18: Abtriebsverzahnung
- 19: Mahlringaufnahme
- 20: Mahlringabdeckung
- 21: Wälzlager
- 22: Wälzkörper
- 23: Wälzkörperführung
- 24: Dämpfungselement
- 25: Dämpfungselement
- 26: Wellenaufnahmeabschnitt
- 27: Elektromotorabschnitt
- 28: Verstellring
- 29: Verstellringverzahnung
- 30: Innengewinde
- 31: Mahlwerkauslass
- 32: Kaffeebohnen
- 33: Kaffeemehl
- 34: Brühkammer
- 35: Brüheinrichtung

## Patentansprüche

1. Kaffeemaschine mit einem Kaffeemaschinengehäuse, mit einer ein Mahlwerk (6) aufweisenden Kaffemühle (2) zum Mahlen von Kaffeebohnen (32) zu Kaffeemehl (33) und mit einer eine zwischen einer Befüllposition und einer Brühposition verstellbare Brühkammer (34) aufweisenden Brüheinrichtung (35) zum Auslaugen des Kaffeemehls (33) mit heißem Wasser zur Erzeugung eines Kaffeegetränkes, wobei der Kaffemühle (2) ein Elektromotor (1) zugeordnet ist, mit dem ein Mahlring (8) des Mahlwerks (6) um eine Drehachse (13) relativ zu einem radial innerhalb des Mahlrings (8) angeordneten Mahlkegel (7) über eine von der Drehachse (13) beabstandet angeordneten Welle (14) rotierend antreibbar ist, um die Kaffeebohnen (32) zwischen Mahlring (8) und Mahlkegel (7) zu mahlen,
**dadurch gekennzeichnet,**
**dass** sich die Welle (14) senkrecht zur Drehachse (13) erstreckend angeordnet ist, und dass die Brühkammer (34) in der Befüllposition axial unterhalb des Mahlwerkauslasses (31) angeordnet ist, derart dass die Drehachse (13) den Mahlwerkauslass (31) und die Brühkammer (34), bevorzugt zentrisch, durchsetzt, so dass gemahlenes Kaffeepulver schwerkraftbedingt axial aus dem Mahlwerk (6) in die Brühkammer (34) austragbar ist, insbesondere in diese axial hinein fallen kann, und dass der Elektromotor radial benachbart zum Mahlring (8) angeordnet ist.

2. Kaffeemaschine nach Anspruch 1,
**dadurch gekennzeichnet,**
**dass** Mahlwerk (6) und Elektromotor (1) ausschließlich in einem Bereich oberhalb der Befüllposition der Brühkammer (34) angeordnet sind.

3. Kaffeemaschine nach einem der Ansprüche 1 oder 2,
**dadurch gekennzeichnet,**
**dass** ein, vorzugsweise aus zwei Kunststoffgehäuseschalen gebildetes, innerhalb des Kaffeemaschinengehäuses angeordnetes gemeinsames Gehäuse (3) für den Elektromotor (1) und das Mahlwerk (6) vorgesehen ist.

4. Kaffeemaschine nach Anspruch 3,
**dadurch gekennzeichnet,**
**dass** in dem Gehäuse (3) eine Wellenaufnahmeabschnitt (26) für einen Wellenabschnitt der Welle (14) und ein Dom zur Anordnung, insbesondere zum Aufstecken, des Mahlkegels (7) vorgesehen sind, derart, dass die Längserstreckungen der Wellenaufnahme und des Dorns (9) senkrecht zueinander orientiert sind.

5. Kaffeemaschine nach einem der Ansprüche 3 oder 4,
**dadurch gekennzeichnet,**
**dass** der Mahlkegel (7) an dem gemeinsamen Gehäuse (3) festgelegt ist, bevorzugt über eine senkrecht zu Welle (14) orientierte Fixierschraube (11), die eine, bevorzugt zentrische, Öffnung einer, vorzugsweise schneckenartigen, Kaffeebohnenführung (10) durchsetzt.

6. Kaffeemaschine nach einem der Ansprüche vorhergehenden,
**dadurch gekennzeichnet,**
**dass** der Mahlring (8) axial relativ zu dem Mahlkegel (7) verstellbar angeordnet ist.

7. Kaffeemaschine nach Anspruch 6,
**dadurch gekennzeichnet,**
**dass** der Mahlring (8) in einer Mahlringaufnahme (19) angeordnet ist, die über ein Wälzlager (21) relativ zu einer Wälzkörperführung (23) rotierbar ist und dass der Wälzkörperführung (23) ein Verstellring (28) zugeordnet ist, der mit der Wälzkörperführung (23) derart in Eingriff ist, dass ein Verdrehen des Verstellrings (28) zu einer Axialverstellung der Wälzkörperführung, der Mahlringaufnahme (19) und des Mahlrings (8) relativ zu dem Mahlkegel (7) führt.

8. Kaffeemaschine nach Anspruch 7,
**dadurch gekennzeichnet,**
**dass** der Verstellring (28) eine Verstellringverzahnung (29) zugeordnet ist, die manuell greifbar und/oder mit einem Verstellmotor zum automatischen Verstellen des Verstellrings (28) gekoppelt ist.

9. Kaffeemaschine nach einem der Ansprüche 7 oder 8,
**dadurch gekennzeichnet,**
**dass** sich die Mahlringaufnahme (19) und/oder die Wälzkörperführung (23) über mindestens Dämpfungselement (24, 25) an dem gemeinsamen Gehäuse (3) abstützen/abstützt.

10. Kaffeemaschine nach einem der vorhergehenden Ansprüche,
**dadurch gekennzeichnet,**
**dass** der Brüheinrichtung ein Antrieb, insbesondere ein Elektromotor zum Verstellen der Brühkammer zwischen der Befüllposition und der Brühposition zugeordnet ist.

11. Kaffeemaschine nach einem der vorhergehenden Ansprüche,
**dadurch gekennzeichnet,**
**dass** eine zentrische Längsachse der Brühkammer, die in der Befüllposition der Brühkammer (34) bevorzugt mit der Drehachse des Mahlwerks fluchtet in der Brühposition mit der Drehachse (13) des Mahlwerks einen Winkel einschließt.

12. Kaffeemaschine nach einem der vorhergehenden Ansprüche,
**dadurch gekennzeichnet,**
**dass** die Welle (14), insbesondere mit einem Schneckenabschnitt (17), in eine umfängliche Verzahnung, insbesondere Abtriebsverzahnung (18), einer Mahlringaufnahme (19) oder des Mahlrings (8) eingreift.

## Claims

1. A coffee machine with a coffee machine housing, with a coffee mill (2) comprising a grinder (6) for grinding coffee beans (32) to produce coffee grounds (33) and with a brewing device (35) for squeezing hot water through the coffee grounds (33) to produce a coffee beverage, the brewing device (35) having a brewing chamber (34) which can be adjusted between a filling position and a brewing position, wherein the coffee grinder (2) has an electric motor (1) associated with it, with which a grinding ring (8) of the grinder (6) can be rotatingly driven about a rotary axis (13) relative to a grinding cone (7) radially arranged within the grinding ring (8) via a drive shaft (14) spaced apart from the rotary axis (13), in order to grind the coffee beans (32) between the grinding ring (8) and the grinding cone (7),
**characterised in that**
the drive shaft (14) is disposed extending at right angles to the rotary axis (13), and **in that**, in the filling position, the brewing chamber (34) is disposed axially below the grinder outlet (31) such that the rotary axis (13) passes, preferably centrally, through the grinding outlet (31) and the brewing chamber (34), so that ground coffee powder, due to the rule of gravity, can be delivered axially from the grinder (6) into the brewing chamber (34), in particular can fall axially into the same, and **in that** the electric motor is radially adjacent to the grinding ring (8).

2. The coffee machine according to claim 1,
**characterised in that**
the grinder (6) and the electric motor (1) are arranged exclusively in an area above the filling position of the brewing chamber (34).

3. The coffee machine according to one of claims 1 or 2,
**characterised in that**
a common casing (3) is provided for the electric motor (1) and the grinder (6), which is preferably made up of two plastic casing shells and arranged within the coffee machine housing.

4. The coffee machine according to claim 3,
**characterised in that**
a shaft support section (26) for a shaft section of the drive shaft (14) and a mandrel for placing, in particular for attaching, the grinding cone (7) are provided inside the casing (3), such that the longitudinal extensions of the shaft support and the mandrel (9) are oriented at right angles to one another.

5. The coffee machine according to one of claims 3 or 4,
**characterised in that**
the grinding cone (7) is fixed to the common casing (3), preferably via a fixing screw (11) oriented at right angles to the drive shaft (14), which passes through a preferably central opening of a preferably screw-like coffee bean guide (10).

6. The coffee machine according to any of the preceding claims,
**characterised in that**
the grinding ring (8) is arranged so that it can be axially adjusted relative to the grinding cone (7).

7. The coffee machine according to claim 6,
**characterised in that**
the grinding ring (8) is arranged in a grinding ring mounting (19) which, via a roller bearing (21), is rotatable relative to a rolling element guide (23) and **in that** the rolling element guide (23) has an adjustment ring (28) associated with it, which engages with the rolling element guide (23) so that twisting the adjustment ring (28) leads to an axial adjustment of the rolling element guide, the grinding ring mounting (19), and the grinding ring (8) relative to the grinding cone (7).

8. The coffee machine according to claim 7,
**characterised in that**
the adjustment ring (28) has an adjustment ring gearing (29) associated with it, which can be grasped by hand and/or is coupled with an adjustment motor for automatic adjustment of the adjustment ring (28).

9. The coffee machine according to one of claims 7 or 8,
**characterised in that**
the grinding ring mounting (19) and/or the rolling element guide (23) is/are supported via at least one damping element (24, 25) against the common casing (3).

10. The coffee machine according to any of the preceding claims,
**characterised in that**
the brewing device has a drive, in particular an electric motor associated with it, for moving the brewing chamber between the filling position and the brewing position.

11. The coffee machine according to any of the preceding claims,
**characterised in that**
a central longitudinal axis of the brewing chamber, which in the filling position of the brewing chamber (34) is preferably aligned with the rotary axis of the grinder, encloses an angle with the rotary axis (13) of the grinder in the brewing position.

12. The coffee machine according to any of the preceding claims,
**characterised in that**
the drive shaft (14), engages, in particular with a screw section (17), in a circumferential gearing, in particular a drive gearing (18), of a grinding ring mounting (19) or the grinding ring (8).

## Revendications

1. Cafetière avec un carter de cafetière, avec un moulin à café (2) comportant une meule (6) pour moudre des grains de café (32) en mouture de café (33) et avec un dispositif d'ébouillantage (35) comportant une chambre d'ébouillantage (34) pouvant être déplacée entre une position de remplissage et une position d'ébouillantage afin de réaliser la lixiviation de la mouture de café (33) avec de l'eau chaude pour produire une boisson au café, un moteur électrique (1) étant associé au moulin à café (2), ledit moteur permettant d'entraîner en rotation une bague de mouture (8) de la meule (6) autour d'un axe de rotation (13) par rapport à un cône de mouture (7) disposé dans le plan radial à l'intérieur de la bague de mouture (8), via un arbre (14) disposé à l'écart de l'axe de rotation (13), pour moudre les grains de café (32) entre la bague de mouture (8) et le cône de mouture (7), **caractérisée en ce que** l'arbre (14) est disposé de façon à s'étendre perpendiculairement à l'axe de rotation (13) et que la chambre d'ébouillantage (34) est disposée dans la position de remplissage dans le plan axial en dessous de la sortie de meule (31), de telle sorte que l'axe de rotation (13) traverse la sortie de meule (31) et la chambre d'ébouillantage (34), de façon préférée de façon centrée, de sorte que le café en poudre moulu peut être transporté, du fait de la pesanteur, hors de la meule (6) dans le plan axial jusque dans la chambre d'ébouillantage (34), pouvant notamment tomber dans celle-ci dans le plan axial et que le moteur électrique est disposé dans le plan radial à côté de la bague de mouture (8).

2. Cafetière selon la revendication 1, **caractérisée en ce que** la meule (6) et le moteur électrique (1) sont disposés exclusivement dans une région située au-dessus de la position de remplissage de la chambre d'ébouillantage (34).

3. Cafetière selon l'une quelconque des revendications 1 ou 2, **caractérisée en ce qu'**un carter (3) commun, de préférence formé de deux coques de carter en matière plastique, disposé à l'intérieur du carter de cafetière, est prévu pour le moteur électrique (1) et la meule (6).

4. Cafetière selon la revendication 3, **caractérisée en ce que** dans le carter (3), une section de logement d'arbre (26) est prévue pour une section d'arbre de l'arbre (14) et qu'un dôme d'agencement, notamment d'enfichage, du cône de mouture (7) est prévu, de telle sorte que les prolongements longitudinaux du logement d'arbre et du dôme (9) sont orientés perpendiculairement l'un par rapport à l'autre.

5. Cafetière selon l'une quelconque des revendications 3 ou 4, **caractérisée en ce que** le cône de mouture (7) est fixé au niveau du carter (3) commun, de façon préférée via une vis de fixation (11) orientée perpendiculairement à l'arbre (14) traversant une ouverture, de façon préférée centrée, d'un système de guidage de grains de café (10), de préférence de type vis sans fin.

6. Cafetière selon l'une quelconque des revendications précédentes, **caractérisée en ce que** la bague de mouture (8) est disposée de façon à pouvoir être déplacée dans le plan axial par rapport au cône de mouture (7).

7. Cafetière selon la revendication 6, **caractérisée en ce que** la bague de mouture (8) est disposée dans un logement de bague de mouture (19) pouvant pivoter, via un palier à rouleau (21), par rapport à un système de guidage de corps de rouleau (23) et qu'une bague de réglage (28) est associée au système de guidage de corps de rouleau (23), ladite bague étant en prise avec le système de guidage de corps de rouleau (23) de telle sorte qu'une rotation de la bague de réglage (28) induit un déplacement axial du système de guidage de corps de rouleau, du logement de bague de mouture (19) et de la bague de mouture (8) par rapport au cône de mouture (7).

8. Cafetière selon la revendication 7, **caractérisée en ce qu'**un endentement de bague de réglage (29) est associé à la bague de réglage (28), ledit endentement pouvant être engrené manuellement et/ou être couplé à un moteur de déplacement permettant de déplacer automatiquement la bague de réglage (28).

9. Cafetière selon l'une quelconque des revendications 7 ou 8, **caractérisée en ce que** le logement de bague de mouture (19) et/ou le système de guidage de corps de rouleau (23) appuie ou appuient, via au moins un élément d'amortissement (24, 25), contre le carter (3) commun.

10. Cafetière selon l'une quelconque des revendications précédentes, **caractérisée en ce qu'**un entraînement en entrée, notamment un moteur électrique, est associé au dispositif d'ébouillantage pour déplacer la chambre d'ébouillantage entre la position de remplissage et la position d'ébouillantage.

11. Cafetière selon l'une quelconque des revendications précédentes, **caractérisée en ce qu'**un axe longitudinal centré de la chambre d'ébouillantage, de préférence aligné, dans la position de remplissage de la chambre d'ébouillantage (34), avec l'axe de rotation de la meule, forme, dans la position d'ébouillantage, un angle avec l'axe de rotation (13) de la meule.

12. Cafetière selon l'une quelconque des revendications précédentes, **caractérisée en ce que** l'arbre (14) s'engrène, notamment avec une section de vis sans fin (17), dans un endentement périphérique, notamment un endentement d'entraînement en sortie (18), d'un logement de bague de mouture (19) ou de la bague de mouture (8).
